(19) Europäisches Patentamt
European Patent Office
Office européen des brevets

(11) **EP 1 612 997 B1**

(12) **EUROPÄISCHE PATENTSCHRIFT**

(45) Veröffentlichungstag und Bekanntmachung des Hinweises auf die Patenterteilung:
**19.12.2012 Patentblatt 2012/51**

(51) Int Cl.:
*H04L 12/28* *(2006.01)*    *H04B 17/02* *(2006.01)*
*H01Q 3/26* *(2006.01)*    *H04B 1/00* *(2006.01)*

(21) Anmeldenummer: **05013301.6**

(22) Anmeldetag: **21.06.2005**

(54) **Richtfunk-Kommunikationssystem für Tagebau oder Massengut-Umschlagplatz**

Point-to-point radio communications system for open-pit mining or transshipping place for bulk goods

Système communication par radiodiffusion directionnel pour mine à ciel ouvert ou endroit pour charger et décharger des cargaisons volumineuses

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.07.2004 DE 102004031817**

(43) Veröffentlichungstag der Anmeldung:
**04.01.2006 Patentblatt 2006/01**

(73) Patentinhaber: **ABB AG**
**68309 Mannheim (DE)**

(72) Erfinder:
• **Gralow, Bernd Dipl.-Ing.**
**03419 Forst (DE)**
• **Schwedt, Detlef Dipl.-Ing**
**03048 Cottbus (DE)**
• **Storch, Yves Dipl.-Ing.**
**03058 Cottbus (DE)**

(56) Entgegenhaltungen:
**EP-A- 1 341 326       EP-A- 1 369 954**
**WO-A-2004/040803    DE-A1- 4 011 316**
**US-A1- 2001 003 443**

**Beschreibung**

Die Erfindung bezieht sich auf ein Kommunikationssystem im Tagebau sowie Massengut-Umschlagplatz gemäß dem Oberbegriff des Anspruchs 1, insbesondere auf ein System zur Übertragung von Informationen (Daten- / Prozesssignalen und - bildern) zwischen einem (zentralen) Leitstand und mindestens einem Großgerät. Die Erfindung kann beispielsweise als Informationsnetz für den Tagebau beim Abbau/Aufhalden verwendet werden.

Aus der EP 0 994 987 B1 ist ein Schaufelradgerät (Großgerät) zum Abbau von Halden bzw. zum Aufhalden von Massengut bekannt, wobei ein über eine Kabeltrommel geführter Lichtwellenleiter als (vorzugsweise bidirektionale) Kommunikationsverbindung zwischen der Steuerung des Schaufelradgerätes und einem Leitstand vorgesehen ist.

Auf Grund der sich ständig ändernden Tagebau-Geografie ist eine hochflexible Kommunikation zwischen Großgeräten und (zentralem) Leitstand gewünscht. Bisher verwendete Lichtwellenleiter / Kupferleitungen erfüllen diese Forderungen nur eingeschränkt, da sie in gesicherten Kanälen, der Strossengeometrie folgend, verlegt werden müssen. Wird ein Großgerät umgesetzt, muss die Kommunikation zum Leitstand zunächst unterbrochen und anschließend neu verlegt werden, was kostenaufwendig ist und Service-Aufgaben wie z.B. Programm- und Prozessbildänderungen oder Fehleranalysen sind nur bedingt möglich. Zur Durchführung von Service-Aufgaben ist oft ein Aufenthalt auf dem Großgerät notwendig.

Die DE 40 11 316 beschreibt, wie die Position eines Teils eines ortsbeweglichen Schaufelradbaggers mittels Satelliten-Geodäsie bestimmt wird, wobei ein Empfänger in der Nähe des Schaufelrades, ein weiterer Empfänger an einem anderen Bauteil des Schaufelradbaggers und ein dritter Empfänger in einem Gebäude außerhalb des Tagebaus angeordnet sind. Die Empfänger stehen mit einem auf dem Schaufelradbagger angeordneten Prozessrechner in Datenverbindung, wobei die Datenverbindung mittels einer Funkstrecke realisiert sein kann.

Die EP 1 369 954 A offenbart ein mobiles Kommunikationssystem mit mobilen Terminals, beispielsweise Mobiltelefonen, und einer Basisstation. Die mobilen Terminals verfügen über eine adaptive Antenneneinheit, welche mit einem Richtungswinkel-Sensor ausgerüstet ist zur Erfassung der Rotation, Neigung oder aktuellen Position des mobilen Terminals. Diese Informationen werden verwendet zur entsprechenden Korrektur der Richtcharakteristik der Antenne in Richtung der Basisstation.

Der Erfindung liegt die Aufgabe zugrunde, ein Kommunikationssystem der eingangs genannten Art zu realisieren, das sich flexibel den ändernden Gegebenheiten anpasst.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass das vorgeschlagene Kommunikationssystem sehr flexibel, kostengünstig und mit nur geringem Zeitaufwand an sich ändernde Gegebenheiten der Tagebau-Geografie anpassbar ist, d. h. die Kommunikationsstruktur lässt sich in sehr flexibler Weise an sich ändernde geografische Gegebenheiten anpassen und zu jeder Zeit entsprechend neuen Anforderungen ändern. Im Vergleich zu rundabstrahlenden Funksystemen erhöht sich infolge der Verwendung von Richtfunk die Reichweite beträchtlich. Z.B. Service-Aufgaben - wie Programm- und Prozessbildänderungen oder Fehleranalysen - können drahtlos ferngesteuert per Funkübertragung vorgenommen werden, ohne das Großgerät selbst betreten zu müssen, was große Kostenvorteile hat.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:

Fig.1    eine Sicht auf ein Tagebau-Abbaugebiet mit mehreren mobilen Großgeräten als Beispiel,

Fig. 2    eine Seitenansicht eines Großgerätes,

Fig. 3    eine Kommunikationsstruktur mit Client-Station/Server-Station zwischen einem zentralem Leitstand und den Großgeräten,

Fig. 4    eine OPC (Open Process Control) - Kommunikationsstruktur zwischen einem zentralem Leitstand und den Großgeräten.

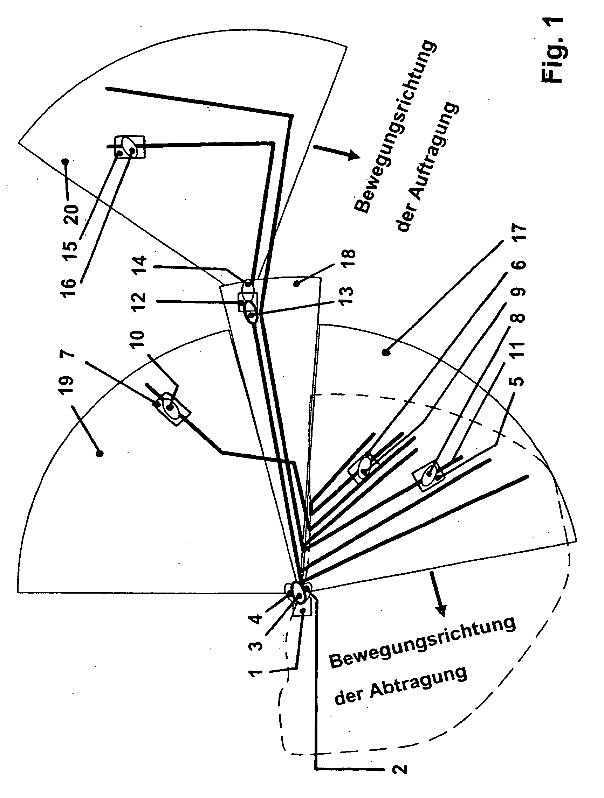

In Fig. 1 ist eine Sicht auf ein Tagebau-Abbaugebiet mit mehreren mobilen Großgeräten als Beispiel dargestellt. Innerhalb des Tagebau-Abbaugebietes bewegen sich mobile Großgeräte 5, 6, 7, 15 entlang vorhandener Strossen 11, d. h. Fahrwege inklusive Bandanlagen für den zum Abbau und Aufhalden notwendigen Material-Transport. Beim Ausführungsbeispiel dienen die Großgeräte 5 und 6 beispielsweise dem Abbau von Material (Massengut), so dass beispielsweise Schaufelradbagger oder Eimerkettenbagger eingesetzt werden, während die Großgeräte 7 und 15 dem Aufhalden von Material (Massengut) dienen, wozu beispielsweise Absetzer eingesetzt werden. Selbstverständlich sind weitere Großgeräte längs der skizzierten Strossen einsetzbar, jedoch aus Gründen der Übersichtlichkeit nicht dargestellt.

Innerhalb des Tagebau-Abbaugebietes ist ein (zentraler) Leitstand 1 vorgesehen, der zugleich als Fixpunkt bzw. fester trigonometrischer Punkt für das Kommunikationssystem dient. Vom Leitstand 1 aus erfolgt die Kommunikation mit den Großgeräten 5, 6, 7, 15. Die Kommunikation erfolgt über Richtfunk (Wireless Local Area Network nach IEEE802.11), wozu der Leitstand 1 und die Großgeräte 5, 6, 7, 15 mit entsprechenden Richtfunkanlagen (Funksender und/oder Funkempfänger inklusive Antennen) ausgerüstet sind. Für die vorzugsweise bidirektionale Kommunikation ist das Tagebau-Abbaugebiet in folgende zwei Arten von Richtfunk-Sektoren aufgebaut (Funkräume):

- Ein Richtfunk-Sektor 17, der eine direkte Kommunikation der Großgeräte mit der ersten Richtantenne 2 des Leitstandes 1 darstellt. Innerhalb des Richtfunk-Sektors 17 befinden sich das Großgerät 5 mit Richtantennensystem 8 und das Großgerät 6 mit Richtantennensystem 9.
- Ein Richtfunk-Sektor 18, der, als Relaisstation, einen entfernteren Richtfunk-Sektor 20 mittels Antenne 3 des Leitstandes 1 in die Kommunikationsstruktur einbindet. Innerhalb des Richtfunksektors 20 befindet sich das Großgerät 15 mit Richtantennensystem 16.

Ein Richtfunk-Sektor 19 mit zugeordneter Antenne 4 des Leitstandes 1 zeigt ein Beispiel für die modulare Erweiterungsmöglichkeit der Kommunikationsstruktur. Innerhalb des Richtfunk-Sektors 19 befindet sich das Großgerät 7 mit Richtantennensystem 10.

Im vom Leitstand entfernten Endbereich des Richtfunk-Sektors 18 befindet sich die Relaisstation 12 (Zwischenstation, Richtfunk-Empfangs-/ Sendestation) mit Richtantenne 14 für den Richtfunk-Sektor 20. Die Kommunikation zwischen Leitstand 1 mit Richtantenne 3 für den Richtfunksektor 18 und Relaisstation 12 mit Antenne 13 kann ebenfalls entsprechend der erfindungsgemäßen Lösung ausgerüstet werden (die Relaisstation befindet sich dann auf einem mobilen Gerät).

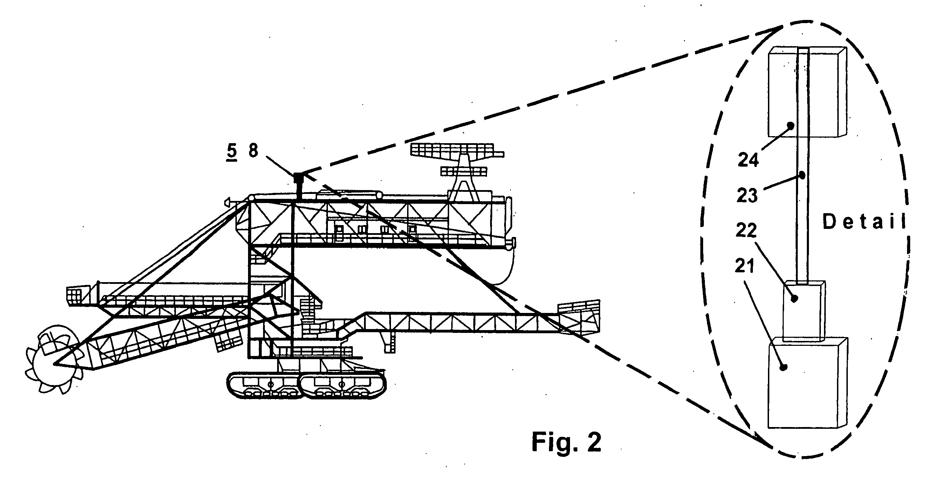

Fig. 2 ist beispielhaft eine Seitenansicht eines Großgerätes dargestellt. Da sich das Großgerät 5 nicht nur längs der Strosse 11 bewegt, sondern zusätzlich hierzu eine Rotation (Eigendrehung) in beliebiger Richtung durchführen kann, ist es erforderlich, dass das Richtantennensystem 8 entsprechend der aktuell vorliegenden Rotation des Großgerätes ausreichend präzise nachgeführt wird, um derart die Kommunikationsverbindung mit der Richtantenne 2 des Leitstandes 1 stets zu gewährleisten. Hierzu ist die eigentliche Richtantenne 24 des Richtantennensystems 8 am Mast 23 eines Antennenrotors 22 befestigt, welcher im/am Schaltschrank 21 des Richtantennensystems montiert ist, wie im vergrößerten Detail auf dem rechten Abschnitt der Fig. 2 gezeigt ist. Diese am Beispiel des Großgerätes 5 beschriebene Konfiguration weisen selbstverständlich auch die weiteren Großgeräte 6, 7, 15 (und gegebenenfalls auch die Zwischenstation 12) auf, um derart die gewünschte Richtfunkverbindung zum Leitstand 1 bzw. zur Zwischenstation 12 bei beliebigen Drehbewegungen des Großgerätes sicherzustellen.

Der Schaltschrank 21 enthält zusätzlich einen GPS-Empfänger (Global Positioning System) sowie einen "Kompass", deren Funktionsweisen bzw. Aufgaben nachfolgend noch näher erläutert werden.

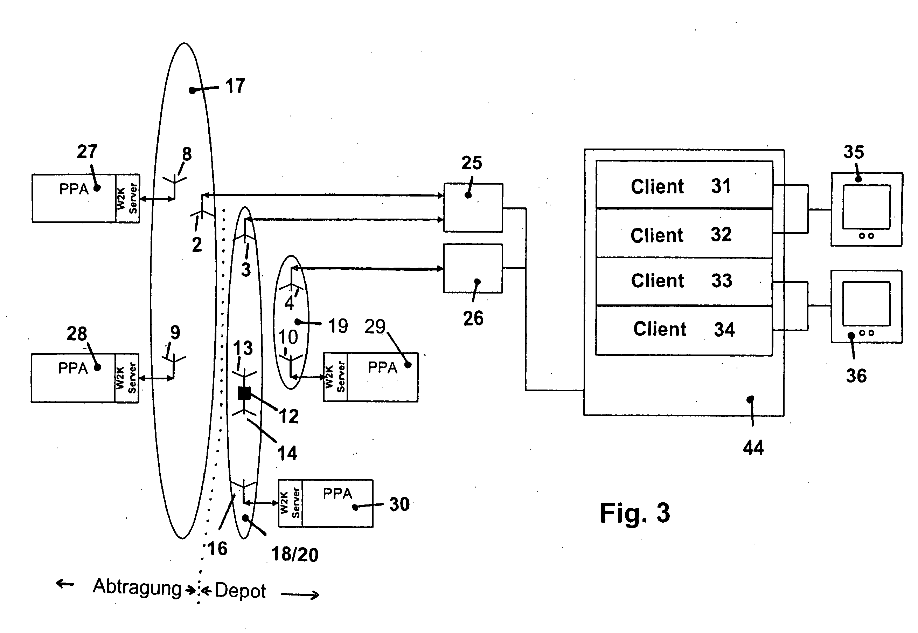

In Fig. 3 ist als erste Ausführungsform des Kommunikationssystems eine Client-Station/Server- Station- Kommunikationsstruktur zwischen dem Leitstand 1 und den Großgeräten 5, 6, 7, 15 dargestellt. Es ist die in Fig. 1 skizzierte Kommunikationsstruktur mit den folgenden Richtfunk-Kommunikationen gezeigt:

- Richtfunk-Sektor 17 mit Richtantenne 2 des Leitstandes 1 und den zugeordneten Richtantennensystemen 8 bzw. 9 der Großgeräte 5 bzw. 6 sowie
- hintereinandergeschaltete Richtfunk-Sektoren 18/20 mit Richtantenne 3 des Leitstandes 1 und der zugeordneten Richtantenne 13 der Relaisstation 12 sowie Richtantenne 14 der Zwischenstation 12 mit zugeordnetem automatisch nachgeführten Richtantennensystem 16 des Großgerätes 15 sowie
- Richtfunk-Sektor 19 mit Richtantenne 4 des Leitstandes 1 und zugeordnetem automatisch nachgeführten Richtantennensystem 10 des Großgerätes 7.

Jedes Richtantennensystem 8 bzw. 9 bzw. 10 bzw. 16 ist mit einem Prozessportal (PPA) 27 bzw. 28 bzw. 29 bzw. 30 verbunden, wobei jedes Prozessportal eine Server-Station aufweist.

Die Richtantennen 2, 3 und 4 sind über Kommunikationsmodule (Übergangseinheiten, z.B. Buskoppler) 25, 26 mit der Elektronik 44 des Leitstandes 1 verbunden, wobei jedem Prozessportal 27 bzw. 28 bzw. 29 bzw. 30 des Großgerätes 5 bzw. 6 bzw. 7 bzw. 15 eine Client-Station 31 bzw. 32 bzw. 33 bzw. 34 (jeweils Client-Station) in der Elektronik 44 zugeordnet ist. Zur Anzeige ist den Client-Stationen 31, 32 eine Anzeigeeinheit 35 sowie den Client-Stationen 33, 34 eine Anzeigeeinheit 36 zugeordnet. Die Datenübertragungsrate zwischen den Übergangseinheiten 25, 26 und der Elektronik 44 kann beispielsweise 100 MBit/s sein.

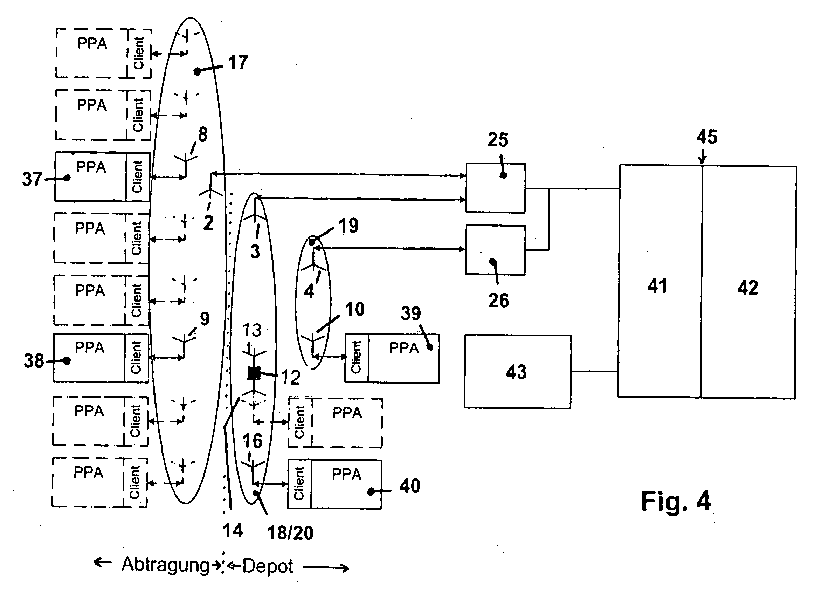

In Fig. 4 ist als zweite Kommunikations-Ausführungsform eine OPC (Open Process Control) - Kommunikationsstruktur zwischen Leitstand und den Großgeräten dargestellt. Es ist wiederum die beispielhaft in Fig. 1 skizzierte Konfiguration mit den folgenden Richtfunk-Kommunikationen gezeigt:

- Richtfunk-Sektor 17 mit Richtantenne 2 des Leitstandes 1 und den zugeordneten Richtantennensystemen 8 bzw. 9 der Großgeräte 5 bzw. 6 sowie
- hintereinandergeschaltete Richtfunk-Sektoren 18/20 mit Richtantenne 3 des Leitstandes 1 und der zugeordneten Richtantenne 13 der Zwischenstation 12 sowie Richtantenne 14 der Zwischenstation 12 mit zugeordnetem Richtantennensystem 16 des Großgerätes 15 sowie
- Richtfunk-Sektor 19 mit Richtantenne 4 des Leitstandes 1 und zugeordnetem Richtantennensystem 10 des Großgerätes 7.

Jedes Richtantennensystem 8 bzw. 9 bzw. 10 bzw. 16 ist mit einem Prozessportal (PPA) 37 bzw. 38 bzw. 39 bzw. 40 verbunden, wobei jedes Prozessportal eine Client-Station aufweist.

Die automatisch nachgeführten Richtantennen 2, 3 und 4 sind über Kommunikationsmodule (z.B. Buskoppler) 25, 26 mit der Elektronik 45 des Leitstandes 1 verbunden, welche sich im wesentlichen aus einem Datenzugriffs-Server-Station 41 mit nachgeschaltetem zentralem Steuer/Regel-Netzwerk 42 zusammensetzt. Die Datenübertragungsrate zwischen den Übergangseinheiten 25, 26 und der Elektronik 45 kann beispielsweise 100 MBit/s sein.

In Fig. 4 ist zusätzlich angedeutet, dass selbstverständlich weitere OPC- Client-Stationen 43 an die Elektronik 45 angeschlossen sein können. Ferner ist ohne Bezifferung der Funktionsblöcke gestrichelt angedeutet, dass sich in den einzelnen Richtfunk-Sektoren weitere Großgeräte bewegen können, welche jeweils automatisch nachgeführten Richtantennensysteme mit angeschlossenen Prozessportalen aufweisen.

Die vorgeschlagene Lösungsgrundlage beruht auf einer Wireless- LAN- Kommunikation mittels einer nachgeführten Richtantenne. Die Nachführung der Richtantenne berücksichtigt die Position des Großgerätes in der Strosse und seine Rotation (Eigendrehung). Die Bewegung des Großgerätes in der Strosse erfolgt relativ zum Leitstand (Fixpunkt, trigonometrischer Punkt) und wird mittels Auswertung von GPS (Global Positioning System) - Koordinaten (Peilung) gegenüber der Nordrichtung berücksichtigt. Die Rotation des Großgerätes wird mittels "Kompass" Peilung gegenüber der Nordrichtung ermittelt. Die Auswertung dieser beiden Winkeländerungen gegenüber der Nordrichtung wird als Nachführwinkel für die erforderliche Antennenausrichtung genutzt.

Das erfindungsgemäße Lösungsverfahren beruht auf den folgenden Kriterien:

- Es existiert mindestens eine feste Antenne (WLAN - Wireless Local Area Network - Antenne), deren Position genau bestimmt werden kann: siehe Richtantennen 2, 3, 4 des Leitstandes 1.
- Die Richtungsabweichung eines mobilen Großgerätes (siehe Ziffern 5, 6, 7, 15, eventuell 12) durch Eigenbewegung in Bezug zur festen Antenne (WLAN-Antenne) wird mittels Nachführung kompensiert: siehe Anordnung mit Schaltschrank 21 + Antennenrotor 22 + Mast 23 + Richtantenne 24.
- Die Nachführung der Antenne des Großgerätes berücksichtigt sowohl die Bewegung des Großgerätes in der Strosse (Fahrweg) als auch die aktuelle Rotation des Großgerätes.

Folgende erfindungsgemäße Lösungsschritte sind vorgesehen:

- Die Nachführung der Antenne des Großgerätes erfolgt mittels des Antennenrotors 22. Selbstverständlich ist die Antennenrotorgeschwindigkeit größer als die mögliche Rotationsgeschwindigkeit des Großgerätes.
- Das Steuersignal zur Nachführung der Richtantenne des Großgerätes wird vorzugsweise in der im Großgerät üblicherweise vorhandenen Automatisierungstechnik erzeugt.
- Zur Berechnung des Steuersignals zur Nachführung der Antenne des Großgerätes werden die Winkelabweichung des Großgerätes gegenüber dem Nordpol und der Peilungswinkel (= Winkel zwischen dem gegenwärtigen Standort des Großgerätes und der festen Antenne) verwendet.
- Bei der Berechnung des Peilungswinkels zwischen Leitstand 1 und einem Großgerät werden das von einem GPS-Empfänger gelieferte Signal (aktuelle GPS-Koordinaten des Großgerätes), insbesondere die gelieferten 2D-Positionen des NMEA-GGA-Protokolls sowie mathematischen Grundlagen der sphärischen Trigonometrie benutzt.
- Die Abweichung durch Rotation des Großgerätes gegenüber dem Nordpol (Rotationswinkel) wird durch Auswertung eines am Großgerät montierten "Kompass" realisiert (z. B. magnetischen 3D-Feldsensors oder digitaler Kompass).
- Der achsensymmetrisch am Großgerät montierte magnetische 3D-Feldsensor (Kompass) wird in seiner Genauigkeit von den systembedingten Sensorparametern (Auflösung) und von dem "hard ironing"-Fehler (bedingt durch die Eisenkomponente des Großgerätes) und / oder dem "soft ironing"-Fehler (elektromagnetische Komponente, bedingt durch eingeschaltete Großverbraucher des Großgerätes) bestimmt. Um diese systembedingten Fehler zu minimieren, wird bei Erstinbetriebnahme mittels einer kompassgenauen Nordausrichtung des mobilen Großgerätes der "ironing offset" des magnetischen 3D-Feldsensors bestimmt und als Korrekturgröße in die Winkelberechnung der Nachführung einbezogen (Kalibrierung).

- Wird ein digitaler Kompass verwendet, wird das von diesem ausgegebene "heading" (Ausrichtung) als Rotationswinkel benutzt.
- Die Anzahl der Prozesskommunikationssignale wird durch die mögliche Bandbreite der WLAN-Antenne und die geforderte Reichweite bestimmt. Grundlage ist die Menge der übertragenen TCP/IP-Pakete (Transport Control Protocol / Internet Protocol
- Abhängig von der geforderten Kommunikationsart ist ein uni-/bidirektionaler Datenaustausch (OPC, siehe Anordnung gemäß Fig. 4) und/oder eine Client-Station / Server-Station - Kommunikation (siehe Anordnung gemäß Fig. 3) möglich. OPC (Open Process Control) bezeichnet dabei den internationalen Standard für Kommunikation in der Industrie und gewährleistet einen Datenaustausch mit "Fremdsystemen".

Selbstverständlich wird zur Bestimmung der Rotation des Großgerätes die Deklination (Abweichung des "magnetischen" Nordpols vom "geografischen" Nordpol) am Einsatzort in die Berechnung der Rotation des Großgerätes einbezogen, desgleichen "unerwartete" Feldstärkeänderungen des Erdmagnetfeldes, welche sich nach erfolgter Kalibrierung - bei welcher das Steuerungsprogramm den "Normalwert" der Feldstärke berechnet und abspeichert - einstellen. Für die Kalibrierung des magnetischen 3 D-Feldsensors wird das Großgerät in mechanischer Nullstellung (Längsrichtung) mittels Handkompass nach Norden ausgerichtet. Die Richtantenne wird horizontal senkrecht zur Längsrichtung des Großgerätes montiert. Der Antennenrotor hat dabei die Position 0°. Die Drehrichtung der Richtantenne erfolgt im Uhrzeigersinn über Osten - Süden - Westen nach Norden (0 - 360°).

Während des Betriebes des Großgerätes wird die aktuelle Feldstärke des Erdmagnetfeldes mit dem abgespeicherten "Normalwert" der Feldstärke verglichen und bei unzulässiger Abweichung wird die aktuell gemessene Richtungsabweichung gegenüber Nord nicht in die Berechnung des Antennennachführwinkels einbezogen. Die magnetischen Feldspulen des magnetischen 3 D-Feldsensors bilden das Erdmagnetfeld gegenüber Nord ab. Die Berechnung des aktuellen Rotationswinkels gegenüber Nord des Großgerätes erfolgt unter Einbezug der Deklination und "unerwarteter" Feldstärkeänderungen.

Wie bereits vorstehend angedeutet, erfolgt eine Berechnung des Peilungswinkels zwischen dem zentralen Leitstand 1 und einem Großgerät unter Verwendung der GPS-Koordinaten des Leitstandes und des Großgerätes, wobei die Fahrgeschwindigkeit des Großgerätes in der Strosse die erzielbare Auflösungsgenauigkeit bei der Positionsbestimmung bestimmt. Die Schwankungen des vom GPS-Empfänger gelieferten Signals werden mittels Filterung geglättet. Die Filterung (Mittelwertbildung über einen vorgegebenen Zeitraum) erfolgt durch Berechnung der maximal zulässigen Änderung des Peilungswinkels als Funktion der Fahrgeschwindigkeit des mobilen Großgerätes in der Strosse.

Der Antennennachführwinkel ist eine Funktion der aktuellen Position des Großgerätes innerhalb der Strosse in Bezug zum Leitstand 1 (Peilungswinkel) sowie dem aktuellen Rotationswinkel des Großgerätes:

$$\text{Antennennachführwinkel} = \text{Peilungswinkel} - \text{Rotationswinkel (gegenüber Nord)}$$

Folgende Datensignale sind beispielsweise zwischen Leitstand und den Großgeräten übertragbar:

- Messsignale von beliebigen Sensoren der Großgeräte,
- Rückmeldesignale von beliebigen Aktoren der Großgeräte,
- Steuersignale für Aktoren der Großgeräte,
- Parametersignale für Sensoren und Aktoren der Großgeräte.

Auch wenn vorstehend der Leitstand 1 zugleich als trigonometrischer Punkt vorgeben ist, kann abweichend hiervon ein beliebiger Fixpunkt als trigonometrischer Punkt des Kommunikationssystems dienen.

Für vorstehenden "Kompass" können 3D-Feldsensoren (magneto-induktive, magneto-resistive oder magnetische Fluxsensoren) verwendet werden, oder ein digitaler Kompass oder Kreiselkompass Anwendung finden. Es können allgemein unterschiedliche Einrichtungen eingesetzt werden, wie

- magneto-inductive-Sensor
- magneto-resistive-Sensor
- magnetic-flux-Sensor
- digitaler Magnetsensor
- Kreiselkompass

Bezugszeichenliste:

| | |
|---|---|
| 1 | Leitstand |
| 2 | erste Richtantenne des Leitstandes |
| 3 | zweite Richtantenne des Leitstandes |
| 4 | dritte Richtantenne des Leitstandes |
| 5 | mobiles Großgerät |
| 6 | mobiles Großgerät |
| 7 | mobiles Großgerät |
| 8 | Richtantennensystem |
| 9 | Richtantennensystem |
| 10 | Richtantennensystem |
| 11 | Strosse |
| 12 | Zwischenstation |
| 13 | erste Richtantenne der Zwischenstation |
| 14 | zweite Richtantenne der Zwischenstation |
| 15 | mobiles Großgerät |
| 16 | Richtantennensystem |
| 17 | Richtfunk-Sektor |
| 18 | Richtfunk-Sektor |
| 19 | Richtfunk-Sektor |
| 20 | Richtfunk-Sektor |
| 21 | Schaltschrank des Richtantennensystems |
| 22 | Antennenrotor |
| 23 | Mast |
| 24 | Richtantenne |
| 25 | Übergangseinheit (Buskoppler) |
| 26 | Übergangseinheit (Buskoppler) |
| 27 | Prozessportal inklusive Server-Station des Großgerätes 5 |
| 28 | Prozessportal inklusive Server-Station des Großgerätes 6 |
| 29 | Prozessportal inklusive Server-Station des Großgerätes 7 |
| 30 | Prozessportal inklusive Server-Station des Großgerätes 15 |
| 31 | Client-Station des Großgerätes 5 |
| 32 | Client-Station des Großgerätes 6 |
| 33 | Client-Station des Großgerätes 7 |
| 34 | Client-Station des Großgerätes 15 |
| 35 | Anzeigeeinheit |
| 36 | Anzeigeeinheit |
| 37 | Prozessportal inklusive Client-Station des Großgerätes 5 |
| 38 | Prozessportal inklusive Client-Station des Großgerätes 6 |
| 39 | Prozessportal inklusive Client-Station des Großgerätes 7 |
| 40 | Prozessportal inklusive Client-Station des Großgerätes 15 |
| 41 | Datenzugriffs-Server-Station |
| 42 | Zentrales Steuer/Regel-Netzwerk |
| 43 | weitere OPC Client-Stationen |
| 44 | Elektronik des Leitstandes |
| 45 | Elektronik des Leitstandes |

**Patentansprüche**

1. Tagebau-Kommunikationssystem oder Massengut-Umschlagplatz-Kommunikationssystem zur Übertragung von Informationen zwischen einem Leitstand (1) und mindestens einem mobilen Großgerät (5, 6, 7), **dadurch gekennzeichnet, dass** ein trigonometrischer Punkt als Fixpunkt des Kommunikationssystems vorgegeben ist, der wenigstens eine Richtantenne (2, 3, 4) aufweist, welche einen Richtfunk-Sektor (17, 18, 19) definiert, innerhalb dessen sich mindestens ein Großgerät (5, 6, 7) bewegen kann, welches (5, 6, 7) über ein Richtantennensystem (8, 9, 10) verfügt, wobei

• eine automatische Ausrichtung der Richtfunk-Übertragungsstrecke zwischen dem trigonometrischen Punkt und dem Großgerät (5, 6, 7) erfolgt,
• sich im Endbereich des Richtfunk-Sektors (17, 18, 19) eine Relaisstation (12) befindet, welche einerseits eine zur Richtantenne (2, 3, 4) des Richtfunk-Sektors (17, 18, 19) gerichtete Richtantenne (13) und andererseits eine weitere Richtantenne (14) aufweist, die einen weiteren Richtfunk-Sektor (20) definiert, innerhalb dessen sich mindestens ein Großgerät (15) mit automatisch nachgeführtem Richtantennensystem (16) bewegen kann, so dass sich eine Hintereinanderschaltung beider Richtfunk-Sektoren (17, 18, 19, 20) ergibt, und
• das automatisch nachgeführte Richtantennensystem (8, 9, 10, 16) eines der Großgeräte (5, 6, 7, 15) in Abhängigkeit seiner aktuellen Position innerhalb des Richtfunk-Sektors (17, 18, 19, 20) und seiner aktuellen Rotation bzw. Eigendrehung nachgeführt wird.

2. Kommunikationssystem nach Anspruch 1, **dadurch gekennzeichnet, dass** der Leitstand (1) selbst als trigonometrischer Punkt vorgegeben ist.

3. Kommunikationssystem nach einem der vorstehenden Ansprüche, **dadurch gekennzeichnet, dass** die Ermittlung der aktuellen Position des Großgerätes (5, 6, 7, 15) innerhalb des Richtfunk-Sektors (17, 18, 19, 20) durch Auswertung seiner GPS (Global Positioning System) -Koordinaten sowie der GPS-Koordinaten des trigonometrischen Punktes (1) erfolgt.

4. Kommunikationssystem nach Anspruch 3, **dadurch gekennzeichnet, dass** eine Mittelwertbildung der GPS-Koordinaten über einen vorgegebenen Zeitraum erfolgt, wobei die Fahrgeschwindigkeit des Großgerätes (5, 6, 7, 15) berücksichtigt wird.

5. Kommunikationssystem nach einem der vorstehenden Ansprüche, **dadurch gekennzeichnet, dass** die Ermittlung der aktuellen Rotation des Großgerätes (5, 6, 7, 15) durch Auswertung der Signale eines magnetischen oder vorzugsweise digitalen Kompasses erfolgt.

6. Kommunikationssystem nach Anspruch 5, **dadurch gekennzeichnet, dass** die Abweichung des "magnetischen" Nordpols vom "geografischen" Nordpol am Massengut-Umschlagplatz berücksichtigt wird.

7. Kommunikationssystem nach Anspruch 5, **dadurch gekennzeichnet, dass** durch die Eisenkomponente eines Großgerätes (6, 6, 7, 16) bedingte Beeinflussungen beim Einsatz eines magnetischen Kompasses berücksichtigt werden.

8. Kommunikationssystem nach Anspruch 5, **dadurch gekennzeichnet, dass** durch die elektromagnetische Komponente eines Großgerätes (5, 6, 7, 15) verursachte Beeinflussungen, bedingt durch eingeschaltete Großverbraucher des Großgerätes, berücksichtigt werden.

9. Kommunikationssystem nach Anspruch 5, **dadurch gekennzeichnet, dass** Feldstärkeänderungen des Erdmagnetfeldes erfasst und berücksichtigt werden.

10. Kommunikationssystem nach einem der vorstehenden Ansprüche, **dadurch gekennzeichnet, dass** ein Antennenrotor (22) zur Nachführung eines Richtantennensystems (8, 9, 10, 16) eingesetzt ist.

11. Kommunikationssystem nach einem der vorstehenden Ansprüche, **dadurch gekennzeichnet, dass** eine Client-Station/Server- Station- Kommunikationsstruktur zwischen dem trigonometrischen Punkt (1) und dem mindestens einen Großgerät (5, 6, 7, 15) vorliegt.

12. Kommunikationssystem nach einem der vorstehenden Ansprüche, **dadurch gekennzeichnet, dass** eine OPC (Open Process Control)-Kommunikationsstruktur zwischen dem trigonometrischen Punkt (1) und dem mindestens einen Großgerät (5, 6, 7, 15) vorliegt.

**Claims**

1. Opencast mining communication system or bulk goods handling station communication system for transmitting information between a control station (1) and at least one mobile major piece of equipment (5, 6, 7), **characterized in that** a trigonometric point is prescribed as a fixed point for the communication system, which fixed point has at least one directional antenna (2, 3, 4) which defines a directional radio sector (17, 18, 19) within which at least one major piece of equipment (5, 6, 7) can move, which (5, 6, 7) has a directional antenna system (8, 9, 10), wherein

- automatic orientation of the directional radio transmission link between the trigonometric point and the major piece of equipment (5, 6, 7) takes place,
- the end region of the directional radio sector (17, 18, 19) contains a relay station (12) which has firstly a directional antenna (13) directed at the directional antenna (2, 3, 4) of the directional radio sector (17, 18, 19) and secondly a further directional antenna (14), which defines a further directional radio sector (20) within which at least one major piece of equipment (15) having an automatically tracked directional antenna system (16) can move, as a result of which the two directional radio sectors (17, 18, 19, 20) are connected in series, and
- the automatically tracked directional antenna system (8, 9, 10, 16) of one of the pieces of major equipment (5, 6, 7, 15) is tracked on the basis of its current position within the directional radio sector (17, 18, 19, 20) and its current rotation or eigen rotation.

2. Communication system according to Claim 1, **characterized in that** the control station (1) itself is prescribed as a trigonometric point.

3. Communication system according to either of the preceding claims, **characterized in that** the current position of the major piece of equipment (5, 6, 7, 15) within the directional radio sector (17, 18, 19, 20) is ascertained by evaluating the GPS (Global Positioning System) coordinates of said major piece of equipment and the GPS coordinates of the trigonometric point (1).

4. Communication system according to Claim 3, **characterized in that** the GPS coordinates are averaged over a prescribed period, with the speed of travel of the major piece of equipment (5, 6, 7, 15) being taken into consideration.

5. Communication system according to one of the preceding claims, **characterized in that** the current rotation of the major piece of equipment (5, 6, 7, 15) is ascertained by evaluating the signals from a magnetic or preferably digital compass.

6. Communication system according to Claim 5, **characterized in that** the discrepancy in the "magnetic" north pole from the "geographical" north pole at the bulk goods handling station is taken into consideration.

7. Communication system according to Claim 5, **characterized in that** influences caused by the iron component of a major piece of equipment (5, 6, 7, 15) are taken into consideration when using a magnetic compass.

8. Communication system according to Claim 5, **characterized in that** influences caused by the electromagnetic component of a major piece of equipment (5, 6, 7, 15), as a result of large loads in the major piece of equipment being switched on, are taken into consideration.

9. Communication system according to Claim 5, **characterized in that** field strength changes in the earth's magnetic field are sensed and taken into consideration.

10. Communication system according to one of the preceding claims, **characterized in that** an antenna rotor (22) is employed for tracking a directional antenna system (8, 9, 10, 16).

11. Communication system according to one of the preceding claims, **characterized in that** a client station/server station communication structure is present between the trigonometric point (1) and the at least one major piece of equipment (5, 6, 7, 15).

12. Communication system according to one of the preceding claims, **characterized in that** an OPC (Open Process Control) communication structure is present between the trigonometric point (1) and the at least one major piece of equipment (5, 6, 7, 15).

**Revendications**

1. Système de communication pour site d'exploitation à ciel ouvert ou système de communication pour poste de transbordement de marchandises en vrac pour la transmission d'informations entre un poste de commande (1) et au moins un engin mobile de grande taille (5, 6, 7), **caractérisé en ce qu'**un point trigonométrique est prédéfini en tant que point fixe du système de communication, lequel présente au moins une antenne directionnelle (2, 3, 4) qui définit un secteur de faisceau hertzien (17, 18, 19) à l'intérieur duquel peut se déplacer au moins un engin de grande taille (5, 6, 7), lequel (5, 6, 7) dispose d'un système d'antennes directionnelles (8, 9, 10),

   * un alignement automatique du trajet de transmission du faisceau hertzien entre le point trigonométrique et l'engin de grande taille (5, 6, 7) ayant lieu,
   * une station relais (12) se trouvant dans la zone finale du secteur de faisceau hertzien (17, 18, 19), laquelle présente d'un côté une antenne directionnelle (13) dirigée vers l'antenne directionnelle (2, 3, 4) du secteur de faisceau hertzien (17, 18, 19) et de l'autre côté une autre antenne directionnelle (14), laquelle définit un autre secteur de faisceau directionnel (20) à l'intérieur duquel peut se déplacer au moins un engin de grande taille (15) muni d'une système d'antennes directionnelles (16) à poursuite automatique, de manière à obtenir une commutation l'un à la suite de l'autre des deux secteurs de faisceau hertzien (17, 18, 19, 20), et
   * le système d'antennes directionnelles (8, 9, 10, 16) à poursuite automatique de l'un des engins de grande taille (5, 6, 7, 15) étant poursuivi en fonction de sa position actuelle à l'intérieur du secteur de faisceau hertzien (17, 18, 19, 20) et de sa rotation actuelle ou rotation propre.

2. Système de communication selon la revendication 1, **caractérisé en ce que** le poste de commande (1) est lui-même prédéfini en tant que point trigonométrique.

3. Système de communication selon l'une des revendications précédentes, **caractérisé en ce que** la détermination de la position actuelle de l'engin de grande taille (5, 6, 7, 15) s'effectue à l'intérieur du secteur de faisceau hertzien (17, 18, 19, 20) en évaluant ses coordonnées GPS (Global Positioning System - Système de positionnement mondial) ainsi que les coordonnées GPS du point trigonométrique (1).

4. Système de communication selon la revendication 3, **caractérisé en ce qu'**un calcul de la valeur moyenne des coordonnées GPS sur une période de temps prédéfinie est effectué, la vitesse de déplacement de l'engin de grande taille (5, 6, 7, 15) étant prise en compte.

5. Système de communication selon l'une des revendications précédentes, **caractérisé en ce que** la détermination de la rotation actuelle de l'engin de grande taille (5, 6, 7, 15) s'effectue par interprétation des signaux d'une boussole magnétique ou de préférence numérique.

6. Système de communication selon la revendication 5, **caractérisé en ce que** la dérive entre le « Pôle nord magnétique » et le « Pôle nord géographique » est prise en compte au poste de transbordement de marchandises en vrac.

7. Système de communication selon la revendication 5, **caractérisé en ce que** les influences liées aux composants ferreux d'un engin de grande taille (5, 6, 7, 15) sont prises en compte lors de l'utilisation d'une boussole magnétique.

8. Système de communication selon la revendication 5, **caractérisé en ce que** les influences provoquées par les composants électromagnétiques d'un engin de grande taille (5, 6, 7, 15), liées aux fortes charges mises en circuit de l'engin de grande taille, sont prises en compte.

9. Système de communication selon la revendication 5, **caractérisé en ce que** les variations de l'intensité du champ magnétique terrestre sont détectées et prises en compte.

10. Système de communication selon l'une des revendications précédentes, **caractérisé en ce qu'**un rotor d'antenne (22) est utilisé pour la poursuite d'un système d'antennes directionnelles (8, 9, 10, 16).

11. Système de communication selon l'une des revendications précédentes, **caractérisé en ce qu'**une structure de communication station cliente / station serveur est présente entre le point trigonométrique (1) et l'au moins un engin de grande taille (5, 6, 7, 15).

**12.** Système de communication selon l'une des revendications précédentes, **caractérisé en ce qu'**une structure de communication OPC (Open Process Control - Commande de processus ouverte) est présente entre le point trigonométrique (1) et l'au moins un engin de grande taille (5, 6, 7, 15).

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- EP 0994987 B1
- DE 4011316

- EP 1369954 A